# EUROPÄISCHE PATENTSCHRIFT

(11) **EP 2 344 785 B1**
(45) Veröffentlichungstag und Bekanntmachung des Hinweises auf die Patenterteilung: **14.11.2012**
(21) Anmeldenummer: 09778290.8
(22) Anmeldetag: 03.09.2009
(51) Int. Cl.: F16H 55/18, F16D 1/08

(54) **GETEILTES RAD**
DIVIDED WHEEL
ROUE À PLUSIEURS PARTIES

(30) Priorität: 04.10.2008 DE 102008050472
(43) Veröffentlichungstag der Anmeldung: 20.07.2011
(73) Patentinhaber: Thyssenkrupp Presta Teccenter Ag, 9492 Eschen (LI)
(72) Erfinder: MEIER, Alex, FL-9495 Triesen (LI)
(74) Vertreter: Adams, Steffen
(86) Internationale Anmeldenummer: PCT/EP2009/006369
(87) Internationale Veröffentlichungsnummer: WO 2010/037457

(56) Entgegenhaltungen:
- JP-A- 2000 257 698
- US-A- 4 747 321

## Beschreibung

Die Erfindung betrifft ein geteiltes Zahnrad mit zwei gegeneinander verspannten Zahnradhälften, wobei die erste Zahnradhälfte einen hohlzylindrischen Bund mit einer Nut aufweist, auf dem die zweite Zahnradhälfte mittels eines in die Nut eingesetzten Befestigungselementes axial formschlüssig befestigt ist, wobei die zweite Ausnehmung eine sich in radialer Richtung erstreckende Ausnehmung aufweist.

Es ist bekannt bei über einen Zahnradtrieb angetriebenen Wellen, wie z.B. Nockenwellen oder Ausgleichswellen, die sich im Betrieb mit halber bzw. doppelter Motorendrehzahl drehen, als Antriebselement anstelle von einfachen, einstückigen Zahnrädern ein jeweils geteiltes Zahnrad mit gegeneinander verspannten Zahnradhälften einzusetzen. Durch die spielfreie Verspannung der Zahnräder wird eine unerwünschte Geräuschentwicklung vermieden, die erfahrungsgemäß bei Verwendung von einstückigen Zahnrädern aufgrund von Spiel auftreten könnte.

Die EP 0 205 156 B1 offenbart ein geteiltes Zahnrad, das aus einem ersten Zahnradteil und einem zweiten Zahnradteil besteht, wobei die Zahnradteile über eine Omega-förmige Feder gegeneinander verspannt sind. Das erste Zahnradteil weist einen hohlzylindrischen zapfenförmigen Bund auf, mit dem es auf eine Welle aufgeschoben werden kann und der im montierten Zustand die Welle umschließt. Das zweite Zahnradteil wird bei der Montage auf den Außenumfang des Bundes aufgeschoben. Der Bund weist an seinem Außenumfang eine Nut auf, in die ein Sprengring (snap ring) eingesetzt wird, mit dem das zweite Zahnradteil auf dem Bund axial formschlüssig befestigt wird. Das zweite Zahnradteil stützt sich mit seiner von dem ersten Zahnradteil abgewandten Seitenfläche an dem Sprengring ab. In den Figuren der EP 0 205 156 B1 ist der Sprengring nicht dargestellt. Die Befestigung der zweiten Zahnradhälfte auf dem Bund wird lediglich im Beschreibungsteil beschrieben und nicht in der Zeichnung dargestellt.

Wird der Sprengring wieder aus der Nut entfernt, so lässt sich das zweite Zahnradteil wieder von dem Bund abziehen. Die beiden Zahnradteile sind daher nicht unlösbar miteinander verbunden, sondern die zweite Zahnradhälfte wird lediglich mit einer lösbaren formschlüssigen Verbindung auf dem Bund gehalten.

Nachteilig bei dieser bekannten Verbindung zwischen den beiden Zahnradhälften ist außerdem, dass in Axialrichtung der Welle gesehen ein großer Bauraum benötigt wird. Denn der Bund der ersten Zahnradhälfte muss in Axialrichtung gesehen deutlich über die von der ersten Zahnradhälfte abgewandten Seitenfläche der zweiten Zahnradhälfte hinaus ragen, damit die Nut in den Bund eingebracht werden kann und gleichzeitig auch noch am freien Ende des Bundes genügend "Fleisch" vorhanden ist, damit der Bund die geforderte Festigkeit aufweist. Insbesondere bei Nockenwellen oder Ausgleichswellen in Verbrennungsmotoren steht den Konstrukteuren jedoch häufig nur ein sehr geringer Bauraum zur Verfügung.

Aus der Druckschrift US 4,747,321 ist es bekannt, bei einem geteilten Zahnrad ein erstes Zahnradteil (second gear 20) mit einem Bund (shaft 22) und ein zweites Zahnradteil (first gear 18) vorzusehen, das auf den Bund aufgeschoben wird. Der Bund weist eine Nut (groove 34) auf, die fluchtend mit einer Bohrung (counterbore 33) in dem zweiten Zahnradteil angeordnet ist. Mit Hilfe eines von außen in die Nut einsetzbaren Bauteils (snap ring 36) wird das zweite Zahnradteil nach dem Aufschieben auf den Bund mit dem ersten Zahnradteil verbunden. Der snap ring 36 ist nach der Montage über die Bohrung in dem zweiten Zahnradteil von außen zugänglich. Er kann wieder entfernt werden, so dass die beiden Zahnradteile wieder voneinander getrennt werden können. Die Nut 34, in die der snap ring 36 eingesetzt ist, ist an dem äußeren Ende des Bundes angeordnet, so dass diese Anordnung in Axialrichtung gesehen einen erheblichen Platzbedarf beansprucht.

In der gattungsgemäβen Druckschrift JP 2000-257698 A wird ein geteiltes Zahnrad beschrieben, bei dem die Zahnradhälften über eine Tellerfeder 7 (plate spring 7) gegeneinander gedrückt werden. Die Tellerfeder 7 ist in einer in der Zahnradhälfte 5 vorgesehenen Ausnehmung von außen zugänglich angeordnet. Wird die Tellerfeder 7 entfernt, so können die Zahnradhälften 5 und 7 wieder voneinander getrennt werden. Die in dem Bund 3a der Zahnradhälfte 3 angeordnete Nut, in welcher sich die Tellerfeder 7 abstützt, ist an dem in Axialrichtung gesehen äußeren Ende des Bundes 3a angeordnet. Dadurch wird in Axialrichtung gesehen ein erheblicher Bauraum beansprucht.

Der Erfindung liegt daher die Aufgabe zu Grunde ein geteiltes Zahnrad mit zwei gegeneinander verspannten Zahnradhälften zu schaffen, bei dem in Axialrichtung gesehen nur ein minimaler Bauraum beansprucht wird und die beiden Zahnradhälften unlösbar miteinander verbunden sind.

Der Erfindung liegt außerdem die Aufgabe zugrunde, ein einfaches Verfahren zum Zusammenbau eines geteilten Zahnrades mit zwei gegeneinander verspannten Zahnradhälften anzugeben, bei dem die beiden Zahnradhälften in Axialrichtung gesehen auf möglichst Platz sparende Weise unlösbar miteinander verbunden werden können.

Diese Aufgabe wird hinsichtlich des Zahnrades gelöst durch ein geteiltes Zahnrad mit den Merkmalen des Patentanspruchs 1. Vorteilhafte Weiterbildungen sind in den Unteransprüchen angegeben.

Hinsichtlich des Verfahrens wird die vorgenannte Aufgabe gelöst durch ein Verfahren mit den Merkmalen des Anspruchs 3.

Das erfindungsgemäße geteilte Zahnrad weist zwei gegeneinander verspannte Zahnradhälften auf, wobei die erste Zahnradhälfte einen hohlzylindrischen Bund mit einer Nut aufweist, auf dem die zweite Zahnradhälfte mittels eines in die Nut eingesetzten Befestigungselementes axial formschlüssig befestigt istDie zweite Zahnradhälfte weist eine sich in radialer Richtung erstreckende Ausnehmung auf. Erfindungsgemäß ist das Befestigungselement als elastisch verformbarer Federring ausgebildet, der in einem durch die Nut und die Ausnehmung definierten, geschlossenen Aufnahmeraum angeordnet ist und die beiden Zahnradhälften unlösbar miteinander verbindet, wobei die Ausnehmung in der zweiten Zahnradhälfte als zwischen den beiden Seitenflächen der zweiten Zahnradhälfte angeordnete Nut ausgebildet ist. Die beiden miteinander zu verbindenden Zahnradhälften weisen erfindungsgemäß somit zueinander korrespondierende Ausnehmungen zur Aufnahme des Federrings auf, und im montierten Zustand der Zahnradhälften verbindet der Federring die Zahnradhälften formschlüssig und unlösbar. Unlösbar ist die Verbindung deshalb, weil die zweite Zahnradhälfte nicht von dem Bund abgezogen werden kann, ohne den Federring und/oder die zweite Zahnradhälfte zu zerstören.

Der Federring ragt nicht in Axialrichtung über die von der ersten Zahnradhälfte abgewandte Seitenfläche der zweiten Zahnradhälfte hinaus. Der Fügebereich, d.h. der Bereich, in dem sich die formschlüssige Verbindung zwischen den beiden Zahnradhälften einstellt, ist somit im Vergleich zu der aus dem eingangs diskutierten Stand der Technik bekannten Verbindung mit dem axial außerhalb der zweiten Zahnradhälfte angeordneten Sprengring in einen Bereich verlagert, der unter der zweiten Zahnradhälfte angeordnet ist. Dadurch muss der Bund der ersten Zahnradhälfte die zweite Zahnradhälfte in Axialrichtung gegebenenfalls nur noch um ein Mindestmaß überragen, um die erforderliche Festigkeit des Bundes sicherzustellen. Der in Axialrichtung benötigte Bauraum ist dadurch minimiert.

Erfindungsgemäß ist der den Federring aufnehmende Raum nicht zur Umgebung hin offen, sondern er ist als geschlossener Aufnahmeraum ausgebildet, der durch die im zusammengebauten Zustand einander überdeckenden Nuten gebildet wird, die einerseits in dem Bund der ersten Zahnrad hälfte und andererseits in der zweiten Zahnradhälfte angeordnet sind. Um dies zu erreichen ist die Ausnehmung in der zweiten Zahnradhälfte als zwischen den beiden Seitenflächen der zweiten Zahnradhälfte angeordnete Nut ausgebildet. Im zusammengebauten Zustand des geteilten Zahnrades ist der die formschlüssige Verbindung herstellende Federring von außen nicht zu sehen. Er wird vollständig von der zweiten Zahnradhälfte überdeckt und ragt nicht über ihre von der ersten Zahnradhälfte abgewandte Seitenfläche hinaus. Bei dieser Ausführungsform der Erfindung ist der Federring nach erfolgter Montage von außen nicht mehr zugänglich. Ein Abziehen der zweiten Zahnradhälfte kann nur noch unter Zerstörung des Federringes und/oder der zweiten Zahnradhälfte und/oder des Bundes erfolgen. Der in Axialrichtung benötigte Bauraum ist entsprechend dieser Ausführungsform erheblich minimiert.

Erfindungungsgemäß kann der Federring kostengünstig als einfaches Drahtbiegeteil ausgebildet sein.

Bei dem erfindungsgemäßen Verfahren zum Zusammenbau eines geteilten Zahnrades mit zwei gegeneinander verspannten Zahnradhälften, wird von einer ersten Zahnradhälfte ausgegangen, die einen hohlzylindrischen Bund mit einer ersten Nut aufweist. Eine zweite Zahnradhälfte wird auf den Bund aufgeschoben, wobei die zweite Zahnradhälfte auf dem Bund mittels eines in die erste Nut eingesetzten Befestigungselementes axial formschlüssig befestigt wird. Erfindungsgemäß wird in der zweiten Zahnradhälfte eine sich in radialer Richtung erstreckende Ausnehmung vorgesehen, die als zwischen den beiden Seitenflächen der zweiten Zahnradhälfte angeordnete zweite Nut ausgebildet ist und sich im zusammengebauten Zustand des Zahnrades zumindest teilweise mit der ersten Nut überdeckt, und vor dem Aufschieben der zweiten Zahnradhälfte auf den Bund wird ein elastisch verformbarer Federring in die Nut eingesetzt, der durch das zweite Zahnradteil beim Aufschieben derart elastisch verformt wird, dass die zweite Zahnradhälfte bis in die Fügeposition auf den Bund aufgeschoben werden kann, wobei der Federring bei Erreichen der Fügeposition in die Ausnehmung unter Ausbildung der axial formschlüssigen Verbindung zurückfedert.

Mit dem erfindungsgemäßen Verfahren lässt sich auf einfache Weise eine unlösbare Verbindung zwischen den beiden Zahnradhälften herstellen und es wird nur ein minimaler Bauraum in Axialrichtung benötigt. Somit lassen sich zusammengebaute zweiteilige Zahnräder herstellen, die eine deutlich geringere Axialerstreckung aufweisen als die eingangs diskutierten bekannten Zahnräder. Insbesondere bei einem Einsatz in Verbrennungsmotoren, z.B. an Nockenwellen oder Ausgleichswellen, kann auf diese Weise Bauraum eingespart bzw. vorhandener Bauraum optimal ausgenutzt werden.

Im Folgenden wird die Erfindung anhand einer Zeichnung näher erläutert, wobei die Fig. 1 bis 3 nicht zu der beanspruchten Erfindung gehörende Ausführungsbeispiele darstellen. Die beanspruchte Erfindung ist in Fig. 4 dargestellt. Im Einzelnen zeigen
- Fig. 1: eine Explosiosdarstellung des geteilten Zahnrades, das am Ende einer Welle angeordnet ist,
- Fig. 2: ein geteiltes Zahnrad im zusammengebauten Zustand im radialen HalbSchnitt,
- Fig. 3: ein geteiltes Zahnrad im zusammengebauten Zustand in einer perspektivi schen Ansicht,
- Fig. 4: ein erfindungsgemäßes geteiltes Zahnrad, bei dem zwei Nuten einen geschlossenen Aufnahmeraum für den Federring bilden.

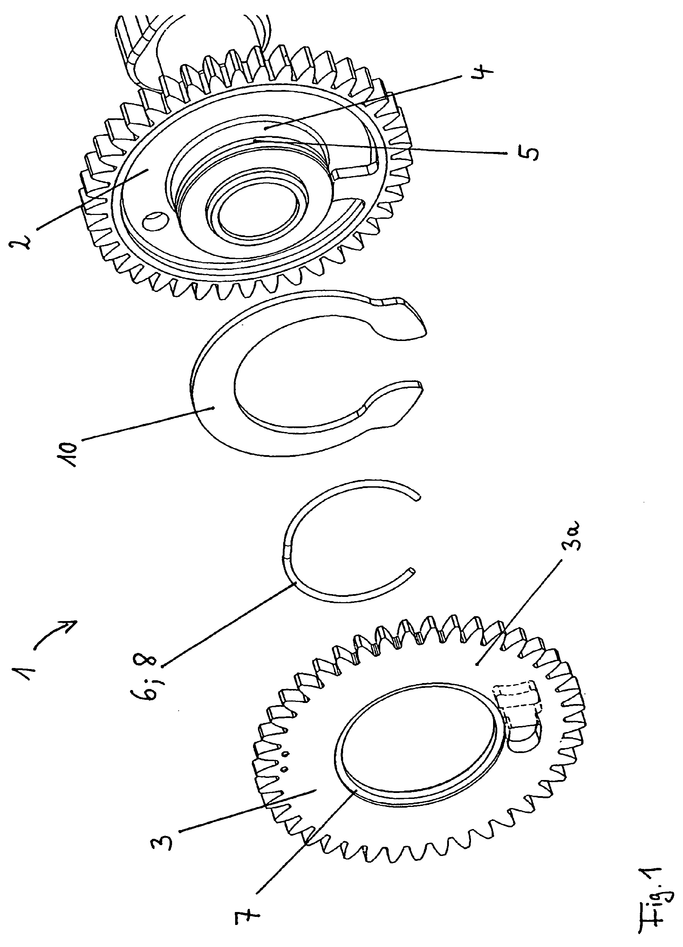

Anhand der Fig. 1 bis 3 wird nachstehend der grundsätzliche konstruktive Aufbau eines geteilten Zahnrades gemäß der vorliegenden Erfindung beschrieben. Die durch die Patentansprüche beanspruchte Erfindung ist in diesen Fig. 1 bis 3 jedoch nicht verwirklicht, da die Ausnehmung 7 im zusammengebauten Zustand mit der Nut 5 keinen geschlossenen Aufnahmeraum für den Federring 8 bildet.

In Fig. 1 sind die einzelnen Bauteile eines geteilten Zahnrades in Form einer Explosionszeichnung dargestellt. Zwischen den beiden Zahnradhälften 2, 3 ist in an sich bekannter Weise ein Federelement 10 angeordnet, das sich im montierten Zustand einerseits an der ersten Zahnradhälfte 2 und andererseits an der zweiten Zahnradhälfte 3 abstützt. Durch dieses Federelement 10 werden die beiden Zahnradhälften im montierten Zustand gegeneinander verspannt. Die erste Zahnradhälfte 2 weist einen sich in Axialrichtung erstreckenden Bund 4 auf. In dem Bund 4 ist eine Nut 5 angeordnet.

Der als Drahtbiegeteil ausgebildete Federring 8 wird in die Nut 5 eingesetzt, bevor die zweite Zahnradhälfte 3 auf den Bund 4 aufgeschoben wird. An der von der ersten Zahnradhälfte 2 abgewandten Seitenfläche 3a der zweiten Zahnradhälfte 3 ist eine Ausnehmung 7 angeordnet, die als Freistich ausgebildet ist. Dieser Freistich wurde im dargestellten Ausführungsbeispiel auf einfache Weise in die zweite Zahnradhälfte hineingedreht oder-gefräst.

Beim Aufschieben der zweiten Zahnradhälfte 3 auf den Bund 4 wird der in die Nut 5 eingesetzte Federring 8 elastisch verformt, d.h. zusammengedrückt. Er taucht dadurch in die Nut 5 ein und gibt den Weg für die zweite Zahnradhälfte 3 frei. Die zweite Zahnradhälfte kann dadurch weiter auf den Bund 4 aufgeschoben werden, bis sie ihre Fügeposition auf dem Bund 4 erreicht. Bei Erreichen der Fügeposition kommen die Ausnehmung 7 und die Nut 5 zumindest teilweise in Überdeckung, und der elastisch zusammengedrückte Federring 8 federt in die Ausnehmung 7 zurück. Dadurch bildet sich zwischen den beiden Zahnradhälften 2, 3 eine axial formschlüssige Verbindung aus, die nur noch unter Zerstörung des Federringes 8 und/oder der zweiten Zahnradhälfte 3 und/oder des Bundes 4 wieder gelöst werden kann.

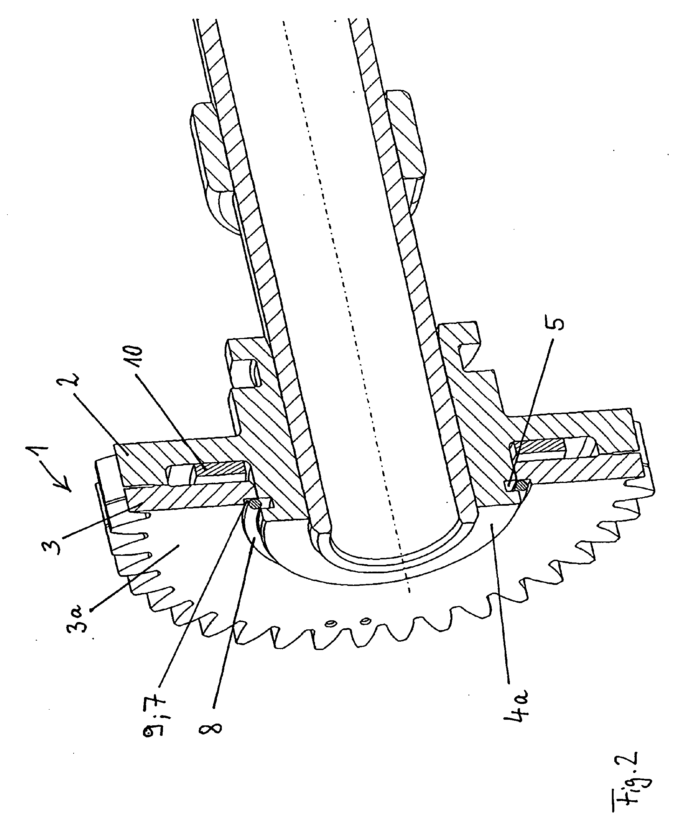

Fig. 2 zeigt das geteilte Zahnrad 1 gemäß Fig. 1 im zusammengebauten Zustand. Der Federring 8 sitzt in dem von der Nut 5 und der Ausnehmung 7 definierten Aufnahmeraum. Der Aufnahmeraum ist nicht nach außen abgeschlossen. Der Federring 8 ist daher von außen noch zugänglich, doch kann er nicht mehr aus dem Aufnahmeraum entfernt werden. Die beiden Zahnradhälften sind daher unlösbar miteinander verbunden.

Der Bund 4 ragt mit seinem freien Ende 4a gegebenenfalls nur ganz geringfügig über die Seitenfläche 3a der zweiten Zahnradhälfte 3 hinaus, und zwar nur gerade um ein Maß, das die erforderliche Festigkeit des mit der Nut 5 versehenen Bundes 4 sicherstellt. Dadurch weist das zusammengebaute Zahnrad eine minimierte Axialerstreckung auf und beansprucht einen minimalen Einbauraum in Axialrichtung gesehen.

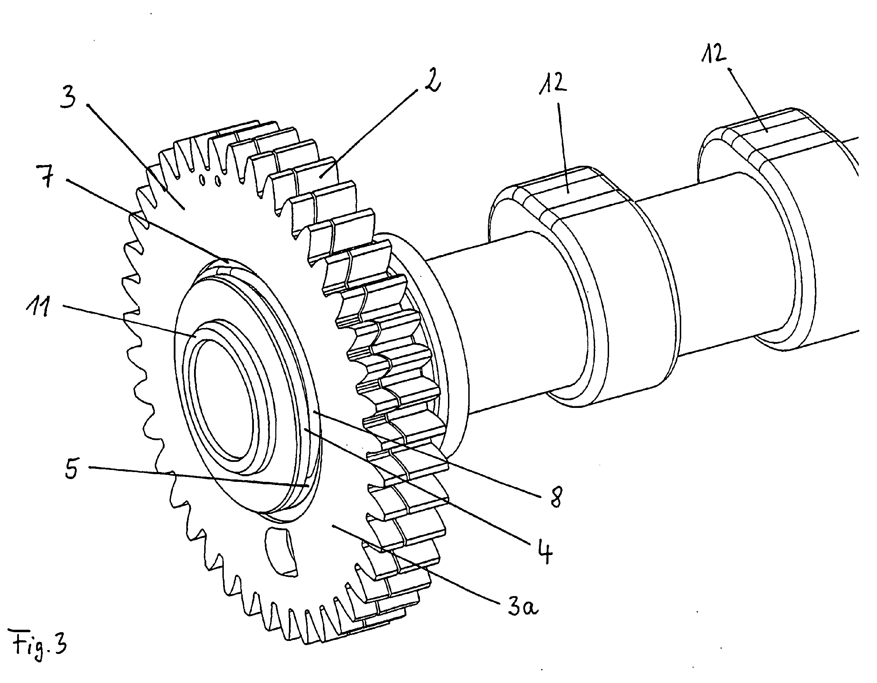

In Fig. 3 ist das geteilte Zahnrad 1 gemäß Fig. 2 in einer perspektivischen Ansicht dargestellt. Es ist gut zu erkennen, dass das Rohr 11 einer mit Nocken 12 bestückten Nockenwelle, auf welches das geteilte Zahnrad im dargestellten Ausführungsbeispiel montiert ist, nur um ein sehr geringes Maß in Axialrichtung über den Bund 4 der ersten Zahnradhälfte 2 hinausragt. Das geteilte Zahnrad schließt somit fast bündig mit dem Bund 4 ab. Es ist auch denkbar, dass das Rohr exakt bündig mit dem Bund 4 abschließt, so dass für das Rohr kein zusätzlicher, über das geteilte Zahnrad 1 hinausgehender axialer Bauraum benötigt wird. Ebenfalls ist gut zu erkennen, dass der Bund 4 der ersten Zahnradhälfte 2 nur um ein sehr geringes Maß axial über die äußere Seitenfläche 3a der zweiten Zahnradhälfte 3 hinausragt. Das zusammengebaute geteilte Zahnrad 1 nimmt daher nur einen sehr geringen axialen Bauraum in Anspruch. Denkbar ist auch, dass der Bund 4 der ersten Zahnradhälfte 2 nicht über die äußere Seitenfläche 3a der zweiten Zahnradhälfte 3 hinausragt.

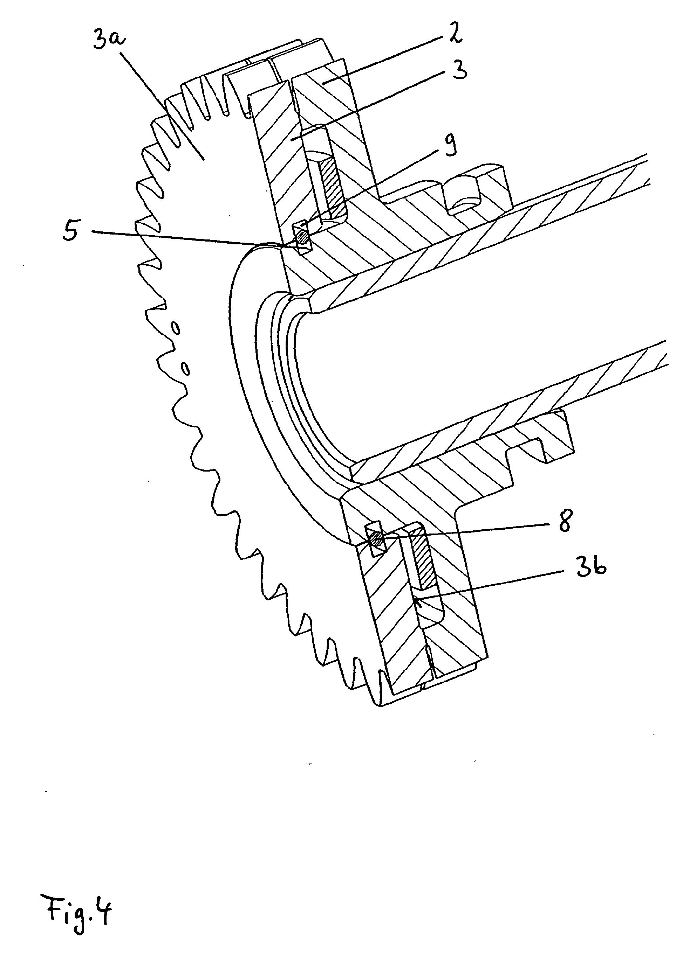

Anhand der Fig. 4 wird nachstehend eine zur beanspruchten Erfindung gehörende Ausführungsform der Erfindung beschrieben.

Wenn man sich vorstellt, dass in Fig. 2 nicht die ganze zweite Zahnradhälfte 3 dargestellt ist, sondern nur die eine Hälfte einer in einer Vertikalebene geschnittenen zweiten Zahnradhälfte 3, so stellt die Ausnehmung 7 die eine Hälfte einer Nut 9 dar (vgl. Fig. 4), die zwischen den äußeren Seitenflächen 3a, 3b der zweiten Zahnradhälfte 3 angeordnet ist. In diesem Fall würde die in Fig. 2 mit dem Bezugszeichen 3a bezeichnete Fläche die in der Schnittebene liegende Schnittfläche der aufgeschnittenen zweiten Zahnradhälfte 3 bilden, und nicht die äußere Seitenfläche der zweiten Zahnradhälfte 3. Dies entspricht der beanspruchten Ausführungsform der Erfindung, wie sie in Fig. 4 dargestellt ist.

Nach der beanspruchten Ausführungsform der Erfindung ist in der zweiten Zahnradhälfte 3 eine Nut 9 vorgesehen, die in dem Bereich zwischen den beiden äußeren Seitenflächen 3a, 3b dieser Zahnradhälfte angeordnet ist. Der Federring 8 sitzt nach dem Zusammenbau des Zahnrads in einem gegenüber der Umgebung abgeschlossenen Aufnahmeraum, der durch die einander überdeckenden Nuten 5 (im Bund 4) und 9 (in der zweiten Zahnradhälfte) gebildet wird. Der den Federring 8 aufnehmende Aufnahmeraum ist von außen nicht zugänglich. Der Federring 8 kann daher nach dem Zusammenbau des Zahnrads nicht mehr mit einem Werkzeug erreicht werden und er bildet in Wechselwirkung mit den Nuten 5 und 9 eine axial formschlüssige, unlösbare Verbindung zwischen den Zahnradhälften 2, 3 aus.

Bei dieser Ausführungsform der Erfindung wird eine besonders kompakte, nach außen abgeschlossene Bauweise des geteilten Zahnrads erreicht, die besonders wenig Bauraum in axialer Richtung beansprucht. Vorteilhaft ist weiter, dass in den Aufnahmeraum von außen keine Fremdkörper oder Schmutzpartikel eindringen und sich dort ansammeln können.

Die Verfahrensweise beim Zusammenbau des geteilten Zahnrades bei dieser zweiten Ausführungsform der Erfindung ist dieselbe wie sie vorstehend zu den Fig.1 bis 3 beschrieben wurde.

### Bezugszeichenliste

- 1: geteiltes Zahnrad
- 2: erste Zahnradhälfte
- 3: zweite Zahnradhälfte
- 3a: Seitenfläche
- 3b: Seitenfläche
- 4: Bund
- 5: Nut
- 6: Befestigungselement
- 7: Ausnehmung
- 8: Federring
- 9: Nut
- 10: Federelement
- 11: Rohr
- 12: Nocke

## Patentansprüche

1. Geteiltes Zahnrad (1) mit zwei gegeneinander verspannten Zahnradhälften (2, 3), wobei die erste Zahnradhälfte (2) einen hohlzylindrischen Bund (4) mit einer Nut (5) aufweist, auf dem die zweite Zahnradhälfte (3) mittels eines in die Nut (5) eingesetzten Befestigungselementes (6) axial formschlüssig befestigt ist, wobei die zweite Zahnradhälfte (3) eine sich in radialer Richtung erstreckende Ausnehmung (7) aufweist, **dadurch gekennzeichnet, dass** das Befestigungselement (6) als elastisch verformbarer Federring (8) ausgebildet ist, der in einem durch die Nut (5) und die Ausnehmung (7) definierten, geschlossenen Aufnahmeraum angeordnet ist und die beiden Zahnradhälften (2, 3) unlösbar miteinander verbindet, wobei die Ausnehmung (7) in der zweiten Zahnradhälfte (3) als zwischen den beiden Seitenflächen (3a, 3b) der zweiten Zahnradhälfte (3) angeordnete Nut (9) ausgebildet ist.

2. Zahnrad nach Anspruch 1, **dadurch gekennzeichnet, dass** der Federring als Drahtbiegeteil ausgebildet ist.

3. Verfahren zum Zusammenbau eines geteilten Zahnrades (1) mit zwei gegeneinander verspannten Zahnradhälften (2, 3), wobei die erste Zahnradhälfte (2) einen hohlzylindrischen Bund (4) mit einer Nut (5) aufweist und die zweite Zahnradhälfte (3) auf den Bund (4) aufgeschoben wird, wobei die zweite Zahnradhälfte (3) auf dem Bund (4) mittels eines in die Nut (5) eingesetzten Befestigungselementes (6) axial formschlüssig befestigt wird, **dadurch gekennzeichnet, dass** in der zweiten Zahnradhälfte (3) eine sich in radialer Richtung erstreckende Ausnehmung (7) vorgesehen wird, die als zwischen den beiden Seitenflächen (3a, 3b) der zweiten Zahnradhälfte (3) angeordnete Nut (9) ausgebildet ist, die sich im zusammengebauten Zustand des Zahnrades zumindest teilweise mit der Nut (5) überdeckt, und dass vor dem Aufschieben der zweiten Zahnradhälfte (3) auf den Bund (4) ein elastisch verformbarer Federring (8) in die Nut (5) eingesetzt wird, der durch das zweite Zahnradteil (3) beim Aufschieben derart elastisch verformt wird, dass die zweite Zahnradhälfte (3) bis in die Fügeposition auf den Bund (4) aufgeschoben werden kann, wobei der Federring (8) bei Erreichen der Fügeposition in die Ausnehmung (7) unter Ausbildung der axial formschlüssigen Verbindung zurückfedert.

## Claims

1. Divided toothed wheel (1) having two mutually braced toothed wheel halves (2, 3), wherein the first toothed wheel half (2) comprises a hollow cylindrical collar (4) having a groove (5), to which the second toothed wheel half (3) is axially attached in a positive-locking manner by means of a fastening element (6) inserted into the groove (5), wherein the second toothed wheel half (3) comprises a radially extending recess (7), **characterised in that** the fastening element (6) is formed as an elastically deformable spring ring (8) which is disposed in a closed reception chamber defined by the groove (5) and the recess (7) and connects the two toothed wheel halves (2, 3) to each other in a non-releasable manner, wherein the recess (7) is formed in the second toothed wheel half (3) as a groove (9) disposed between the two side surfaces (3a, 3b) of the second toothed wheel half (3).

2. Toothed wheel as claimed in Claim 1, **characterised in that** the spring ring is formed as a wire bending part.

3. Method for assembling a divided toothed wheel (1) having two mutually braced toothed wheel halves (2, 3), wherein the first toothed wheel half (2) comprises a hollow cylindrical collar (4) having a groove (5) and the second toothed wheel half (3) is pushed onto the collar (4), wherein the second toothed wheel half (3) is attached in an axially positive-locking manner to the collar (4) by means of a fastening element (6) inserted into the groove (5), **characterised in that** a radially extending recess (7) is provided in the second toothed wheel half (3) and is formed as a groove (9) disposed between the two side surfaces (3a, 3b) of the second toothed wheel half (3), which groove at least partially coincides with the groove (5) in the assembled state of the toothed wheel, and **in that** prior to pushing the second toothed wheel half (3) onto the collar (4), an elastically deformable spring ring (8) is inserted into the groove (5), which spring ring is elastically deformed by the second toothed wheel part (3) while being pushed on such that the second toothed wheel half (3) can be pushed onto the collar (4) into the joining position, wherein the spring ring (8) springs back into the recess (7) forming the axially positive-locking connection when the joining position has been reached.

## Revendications

1. Roue dentée divisée (1) comprenant deux moitiés (2, 3) de roue dentée, qui sont serrées l'une contre l'autre, sachant que la première moitié (2) de roue dentée est dotée d'une embase (4) en forme de cylindre creux, pourvue d'une rainure (5), sur laquelle la deuxième moitié (3) de roue dentée est fixée, par emboîtement axial, au moyen d'un élément de fixation (6), qui est inséré dans la rainure (5), sachant que la deuxième moitié (3) de roue dentée est dotée d'un évidement (7), qui s'étend dans la direction radiale, **caractérisée en ce que** l'élément de fixation (6) est réalisé en tant que bague élastique (8) déformable, disposée dans un réceptacle fermé, qui est défini par la rainure (5) et l'évidement (7) et qui relie ensemble les deux moitiés (2, 3) de roue dentée de manière inséparable, sachant que l'évidement (7) est réalisé dans la deuxième moitié de roue dentée (3) sous la forme d'une rainure (9), qui est disposée entre les deux faces latérales (3a, 3b) de la deuxième moitié de roue dentée (3).

2. Roue dentée selon la revendication 1, **caractérisée en ce que** la bague élastique est réalisée en tant que pièce en fil flexible.

3. Procédé d'assemblage d'une roue dentée divisée (1) comprenant deux moitiés (2. 3) de roue dentée, qui sont serrées l'une contre l'autre, sachant que la première moitié (2) de roue dentée est dotée d'une embase (4) en forme de cylindre creux, avec une rainure (5), et que la deuxième moitié (3) de roue dentée est poussée sur l'embase (4), la deuxième moitié (3) de roue dentée étant fixée sur l'embase (4), par emboîtement axial, au moyen d'un élément de fixation (6), inséré dans la rainure (5), **caractérisé en ce que**, dans la deuxième moitié (3) de roue dentée, est prévu un évidement (7), qui, s'étendant dans la direction radiale, est réalisé sous la forme d'une rainure (9), qui, agencée entre les deux faces latérales (3a, 3b) de la deuxième moitié (3) de roue dentée, qui, lorsque la roue dentée est à l'état assemblée, couvre, au moins partiellement, la rainure (5), et que, avant que la deuxième moitié (3) de roue dentée soit poussée sur l'embase (4), est inséré dans la rainure (5) une bague élastique (8) déformable, qui, lorsque la deuxième moitié (3) de roue dentée est poussée, est déformée élastiquement de sorte que la deuxième moitié (3) de roue dentée peut être poussé sur l'embase (4) jusqu'en position d'emboîtement, sachant que, lorsque la position d'emboîtement est atteinte, la bague élastique (8) fait ressort en arrière en formant une liaison par emboîtement axial.
